# EUROPÄISCHE PATENTSCHRIFT

(11) **EP 3 658 779 B1**
(45) Veröffentlichungstag und Bekanntmachung des Hinweises auf die Patenterteilung: **14.09.2022**
(21) Anmeldenummer: 18733159.0
(22) Anmeldetag: 07.06.2018
(51) Int. Cl.: F04D 29/22, F03B 3/12

(54) **GETEILTES LAUFRAD**
SPLIT IMPELLER
ROUET PARTITIONNÉ

(30) Priorität: 28.07.2017 AT 506292017
(43) Veröffentlichungstag der Anmeldung: 03.06.2020
(73) Patentinhaber: Andritz Hydro GmbH, 1120 Wien (AT)
(72) Erfinder: LOETSCHER, Benno, 6034 Inwil (CH); KUHN, Klaus, 88121 Ravensburg (DE); ISLER, Pascal, 6215 Beromünster (CH)
(74) Vertreter: Wirnsberger & Lerchbaum Patentanwälte OG
(86) Internationale Anmeldenummer: PCT/AT2018/060116
(87) Internationale Veröffentlichungsnummer: WO 2019/018866

(56) Entgegenhaltungen:
- EP-A2- 2 292 933
- WO-A1-99/39096
- CH-A- 233 642
- CH-A- 429 007
- DE-A1-102015 219 331
- DE-B- 1 173 038
- US-A- 2 710 580

## Beschreibung

Die Erfindung betrifft ein Laufrad für eine hydraulische Turbine, Pumpe oder Pumpturbine, insbesondere für eine Francisturbine, welches um eine Rotationsachse drehbar lagerbar ist und entlang einer Umfangsrichtung um die Rotationsachse angeordnete Laufradschaufeln aufweist, wobei das Laufrad zumindest zwei lösbar über Kontaktflächen miteinander verbundene Laufradteile aufweist.

Aus dem Stand der Technik sind verschiedene Laufräder der eingangs genannten Art bekannt geworden. Derartige Laufräder werden insbesondere für Francisturbinen eingesetzt, um beispielsweise elektrische Energie aus Wasserkraft zu gewinnen oder um Flüssigkeiten zu pumpen, und in aller Regel als Integralgussteil, als Schweißkonstruktion oder als geschmiedetes Bauteil hergestellt. Um einen Verschleiß derartiger Laufräder zu minimieren, ist es günstig, wenn die Laufräder mit einer verschleißmindernden Beschichtung beschichtet sind. Das Aufbringen einer solchen Beschichtung ist jedoch bei kleinen und mittelgroßen Laufrädern meist nicht vollständig möglich, weil ein Laufradschaufelkanal zwischen den räumlich stark gekrümmten Laufradschaufeln häufig nicht gänzlich zugänglich ist.

Aus dem Dokument DE 10 2015 219 331 A1 ist es bekannt geworden, das Laufrad geteilt auszubilden, um einfacher zugängliche Schaufelteile zu erhalten. Die Herstellung eines in diesem Dokument offenbarten Laufrades ist jedoch mit hohem Aufwand verbunden, weswegen kleine und mittelgroße Laufräder des Standes der Technik nur mit hohen Kosten oder nicht verschleißbeständig herstellbar sind.

Das Dokument DE 11 73 038 B offenbart ebenfalls ein geteilt ausgebildetes Laufrad.

Hier setzt die Erfindung an. Aufgabe der Erfindung ist es, ein Laufrad der eingangs genannten Art anzugeben, welches auf einfache Weise mit einer Beschichtung versehen werden kann und gleichzeitig einfach und somit kostengünstig herstellbar ist.

Diese Aufgabe wird erfindungsgemäß durch ein Laufrad nach Anspruch 1 gelöst.

Im Rahmen der Erfindung wurde erkannt, dass eine einfache Herstellbarkeit eines Laufrades, bei welchem insbesondere der Laufradschaufelkanal zwischen den Laufradschaufeln auf einfache Weise vollflächig beschichtet werden kann, dann erreicht wird, wenn die Kontaktflächen der einzelnen Laufradteile derart positioniert und ausgerichtet sind, dass ein Moment um die Rotationsachse zwischen den Laufradteilen im Wesentlichen über Kräfte tangential zu den Kontaktflächen übertragbar ist. Derartige Kontaktflächen können einfach gefertigt und mit hoher Präzision hergestellt sowie bearbeitet werden, beispielsweise durch Drehen oder Fräsen. Durch die weitere Limitierung auf ausschließlich solche Kontaktflächen, die senkrecht zur Rotationsachse ausgerichtet sind, ist eine erhebliche

Reduktion einer Komplexität in der Fertigung gegenüber geteilten Laufrädern des Standes der Technik gegebenen.

Die Kontaktflächen können zur Übertragung eines Momentes um die Rotationsachse im Wesentlichen über Kräfte tangential zu den Kontaktflächen als Rotationsflächen um die Rotationsachse ausgebildet sein, beispielsweise als Kegelmantelflächen, Zylinderflächen oder als Flächen senkrecht zur Rotationsachse. Derartige Flächen sind auf einfache Weise herstellbar. Es versteht sich, dass eine solche rotationssymmetrische Kontaktfläche die Rotationsachse nicht zwingend einschließen muss, wenngleich dies bevorzugt ist.

Eine Verbindung der Laufradteile über die Kontaktflächen, um ein Moment um die Rotationsachse tangential zur Kontaktfläche zu übertragen, kann grundsätzlich auf verschiedenste Weisen erfolgen, beispielsweise über Adhäsion. Bevorzugt sind die Laufradteile über die Kontaktflächen lösbar verbunden, um eine Reparatur bzw. einen Austausch eines Laufradteiles auf einfache Weise zu ermöglichen.

Es hat sich bewährt, dass die einzelnen Laufradteile im Wesentlichen kraftschlüssig verbunden sind. Eine Übertragung eines Drehmomentes zwischen den Laufradteilen erfolgt dann im Wesentlichen kraft- bzw. reibschlüssig. Mit Vorteil sind die einzelnen Laufradteile ausschließlich kraftschlüssig verbunden. Mit einer reibschlüssigen Verbindung werden eine Kontaktkorrosion sowie ein Fretting bzw. lokales Verschweißen und Losreißen vermieden, welche bei einer formschlüssigen Kraftübertragung auftreten würden. Ferner sind Verbindungselemente, welche die Laufradteile verbinden, beispielsweise Schrauben, dann bei einem Betrieb im Wesentlichen nur quasi-statisch beansprucht, sodass eine mechanische Belastung derselben minimal und eine hohe Sicherheit gegen Materialermüdung gegeben ist.

Um einen gewünschten Reibwert an den Kontaktflächen trotz eines das Laufrad bei einem Betrieb üblicherweise umgebenden Mediums, in der Regel Wasser, zu gewährleisten, können die Kontaktflächen abgedichtet sein, beispielsweise durch O-Ringe zwischen den Laufradteilen.

Zur Übertragung eines hohen Momentes ist es vorteilhaft, wenn die Laufradteile mittelbar verbunden sind, insbesondere über eine oder mehrere reibwerterhöhende Folien. Dadurch kann auch bei einer geringen Normalkraft bzw. einer geringen Belastung von Verbindungsschrauben eine Übertragung eines hohen Momentes gewährleistet werden. Um eine besonders einfache Herstellbarkeit zu erreichen, ist es günstig, wenn sämtliche

Kontaktflächen parallel sind. Die einzelnen, üblicherweise planen Kontaktflächen können dabei in einer Ebene oder in voneinander beabstandeten Ebenen liegen. Dadurch wird eine Nacharbeitung der Kontaktflächen beispielsweise bei einer Revision des Laufrades besonders vereinfacht, weil eine beispielsweise durch Einbringung von Wärme wellig oder konisch verformte Kontaktfläche einfach saniert werden kann, beispielsweise durch Drehen. Dabei ist häufig eine Bearbeitung in einem Zehntelmillimeterbereich ausreichend, um die Verformung zu beseitigen. Eine derartige Bearbeitung wirkt sich im Wesentlichen nicht auf die hydraulischen Eigenschaften des Laufrades aus, sodass eine Sanierung einer Kontaktfläche einfach und ohne Nachteil für eine Funktionsweise des Laufrades möglich ist.

Erfindungsgemäß sind sämtliche Kontaktflächen senkrecht zur Rotationsachse ausgerichtet.

Eine nachträgliche Bearbeitung einer Kontaktfläche ist dann besonders einfach möglich und hat nur minimale oder keine Auswirkungen auf eine hydraulische Funktion des Laufrades.

Um eine besonders einfache Herstellbarkeit zu erreichen, ist bevorzugt vorgesehen, dass die Kontaktflächen an einem Laufradteil durch nur zwei plane und parallele Oberflächen an Kranz und Nabe des Laufradteiles gebildet werden, welche senkrecht zur Rotationsachse sind. Ein Laufradteil kann dabei auch als hydraulisch eigenständig wirkendes Laufrad ausgebildet sein.

Die Laufradteile können grundsätzlich beliebige Teile des Laufrades umfassen. Eine besonders einfache Herstellbarkeit eines vollflächig beschichtbaren Laufrades wird jedoch erreicht, wenn jeder Laufradteil erfindungsgemäß einen Teil jeder Laufradschaufel aufweist. Sämtliche Laufradschaufeln sind dann so ausgestaltet, dass diese leicht zugänglich und einfach beschichtbar sind. Eine Umschlingung und eine Länge der einzelnen Laufradschaufeln werden dabei reduziert, sodass ein besserer Zugang zum Laufradschaufelkanal erreicht wird, wodurch die Laufradschaufelkanäle zwischen den Laufradschaufeln auch bei sehr kleinen Laufrädern besonders einfach beschichtet werden können. In dem Zusammenhang ist es besonders günstig, wenn sämtliche Laufradschaufeln eines Laufradteiles im Wesentlichen ident sind, um eine Komplexität in der Fertigung zu minimieren. Sofern die einzelnen Laufradteile als hydraulisch eigenständig wirkende Laufräder ausgebildet sind, weist jede Laufradschaufel jedes Laufradteiles eine eigene Eintrittskante und eine eigene Austrittskante auf.

Mit Vorteil ist vorgesehen, dass jeder Laufradteil die Rotationsachse umschließt. Das Laufrad wird somit axial in mehrere Laufradteile geteilt, wodurch eine gleichmäßige Spannungsverteilung in den einzelnen Laufradteilen erreicht wird.

In der Regel wird das Laufrad entlang der Rotationsachse in mehrere Laufradteile geteilt, wobei eine Größe der einzelnen Laufradteile bzw. eine Position von Teilungsebenen erfindungsgemäß derart gewählt werden, dass an einem Kranz und an einer Nabe des Laufrades Kontaktflächen senkrecht zur Rotationsachse gebildet werden. Ein Laufradteil kann dabei auch als eigenständiges Laufrad ausgebildet sein, sodass das Laufrad aus mehreren eigenständigen Laufrädern zusammengestellt ist. Ferner werden Größe der einzelnen Laufradteile oder Laufräder und eine Position von einer oder mehreren Teilungsebenen üblicherweise derart gewählt, dass eine Zugänglichkeit zu den Bereichen optimal ist, um eine Beschichtung aufbringen sowie Reparaturen von beispielsweise durch Abrasion bedingten Schäden, insbesondere Schweiß- oder Schleifarbeiten, einfach durchführen zu können.

Es hat sich bewährt, dass jeder Laufradteil erfindungsgemäß einen Teil eines Kranzes des Laufrades aufweist. Darüber hinaus hat es sich als vorteilhaft erwiesen, wenn jeder Laufradteil erfindungsgemäß einen

Teil einer Nabe des Laufrades aufweist. Das Laufrad wird somit axial in mehrere Laufradschaufelringe geteilt, welche jeweils als hydraulisch eigenständige Laufräder arbeiten können. Bei einer Unterteilung des Laufrades in zwei Laufradteile wird dann beispielsweise eine Aufteilung in einen Laufradteil, welcher einen Hochdruck-Laufradschaufelring bildet, und einen Laufradteil, welcher einen Niederdruck-Laufradschaufelring bildet, erreicht, wobei der Niederdruck-Laufradschaufelring dem Hochdruck-Laufradschaufelring bei einer Anwendung des Laufrades für eine Turbine in Strömungsrichtung nachgelagert ist, sodass eine Serienschaltung der Laufradschaufelringe gegeben ist. Es versteht sich, dass bei Verwendung des Laufrades für eine Pumpe der Hochdruck-Laufradschaufelring dem Niederdruck-Laufradschaufelring in Strömungsrichtung nachgelagert ist. Die einzelnen Laufradschaufelringe werden dabei so ausgelegt, dass die Serienschaltung eine geforderte hydraulische Charakteristik ergibt. Hierzu kann vorgesehen sein, dass Eintritts- und Austrittskanten der einzelnen Laufradschaufelringe entsprechend profiliert ausgebildet sind.

Ein erfindungsgemäßes Laufrad kann somit als Hintereinanderschaltung von zwei oder mehr eigenständigen Laufrädern bzw. Laufradschaufelringen ausgebildet sein, welche jeweils Laufradschaufeln mit gesonderten Eintritts- und Austrittskanten aufweisen, die versetzt angeordnet, jedoch mechanisch starr verbunden sind. Die Laufradschaufeln der einzelnen Laufradteile können daher bei einem erfindungsgemäßen Laufrad gleichwertig mit sonstigen Laufradschaufeln bzw. Laufradschaufeln eines eigenständigen Laufrades sein. Im Unterschied dazu weisen geteilte Laufräder des Standes der Technik lediglich geteilte Laufradschaufeln auf, welche über Kontaktflächen dicht und versatzfrei verbunden sind, sodass sich bei Laufrädern des Standes der Technik zwischen den Laufradteilen im Unterschied zum erfindungsgemäßen Laufrad keine zusätzlichen Eintritts- und Austrittskanten ergeben.

Darüber hinaus ist erfindungsgemäß vorgesehen, dass die einzelnen Laufradschaufelringe bzw. Laufradteile in einem zusammengebauten Zustand in einem Bereich der Laufradschaufeln voneinander beabstandet sind, um einen optimalen Wirkungsgrad zu erreichen. Dabei entfällt auch eine Kontaktfläche zwischen den Laufradteilen an den Laufradschaufeln, sodass eine reduzierte Komplexität in der Fertigung erreicht wird.

Ferner können die Laufradschaufelringe auch relativ zueinander verdreht angeordnet sein, um einen Wirkungsgrad zu maximieren. Ein zur Wirkungsgradmaximierung erforderlicher Abstand zwischen den Laufradschaufeln sowie ein Verdrehwinkel zwischen den Laufradschaufelringen bzw. Laufradteilen kann dabei in Versuchen und/oder rechnerisch ermittelt werden, beispielsweise in Simulationen.

Üblicherweise wird das Laufrad dann so ausgelegt, dass ein hydraulisches Moment und ein Axialschub von einem oder mehreren Niederdruck-Laufradschaufelringen an den Hochdruck-Laufradschaufelring übertragen werden, von welchem die Momente und Kräfte an eine Welle übertragen werden, welche beispielsweise mit einem Generator verbunden sein kann. Die Welle ist üblicherweise mit der Nabe des Laufrades verbunden.

Um Reparaturen auf einfache Weise durchführen zu können, ist erfindungsgemäß vorgesehen, dass die einzelnen Laufradteile über Schraubverbindungen an einer Nabe des Laufrades und einem Kranz des Laufrades verbunden sind. Die Laufradteile können so einfach voneinander gelöst werden.

Zur Minimierung eines Verschleißes des Laufrades, ist es günstig, wenn die Laufradschaufeln der Laufradteile in einem zusammengebauten Zustand beabstandet und derart angeordnet sind, dass bei einem bestimmungsgemäßen Betrieb eine Abströmung eines vorgelagerten Laufradteiles in einen Laufradschaufelkanal eines nachgelagerten Laufradteiles führt und die Abströmung des vorgelagerten Laufradteiles im Wesentlichen nicht auf eine Eintrittskante des nachgelagerten Laufradteiles triff. Insbesondere bei einer Verwendung des Laufrades in Flüssigkeiten mit hohem Feststoffgehalt wie beispielsweise Wasser mit hohem Sandanteil wird dadurch ein Verschleiß einer Eintrittskante nachgelagerter Laufradteile bzw. eines Niederdruck-Laufradschaufelringes auf einfache Weise minimiert. Als Eintrittskante wird hierbei eine Kante der Laufradschaufel des nachgelagerten Laufradteiles verstanden.

Um eine hohe Standzeit zu erreichen, ist es günstig, wenn die Laufradschaufeln eine vor Abrasion schützende Beschichtung aufweisen. Üblicherweise erfolgt eine Beschichtung mittels Hochgeschwindigkeits-Flammspritzen bzw. in einem sogenannten HVOF-Spritzverfahren. Natürlich kann die Beschichtung auch in einem anderen Verfahren hergestellt werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 ein erfindungsgemäßes Laufrad in Explosionsdarstellung;
Fig. 2 ein erfindungsgemäßes Laufrad.

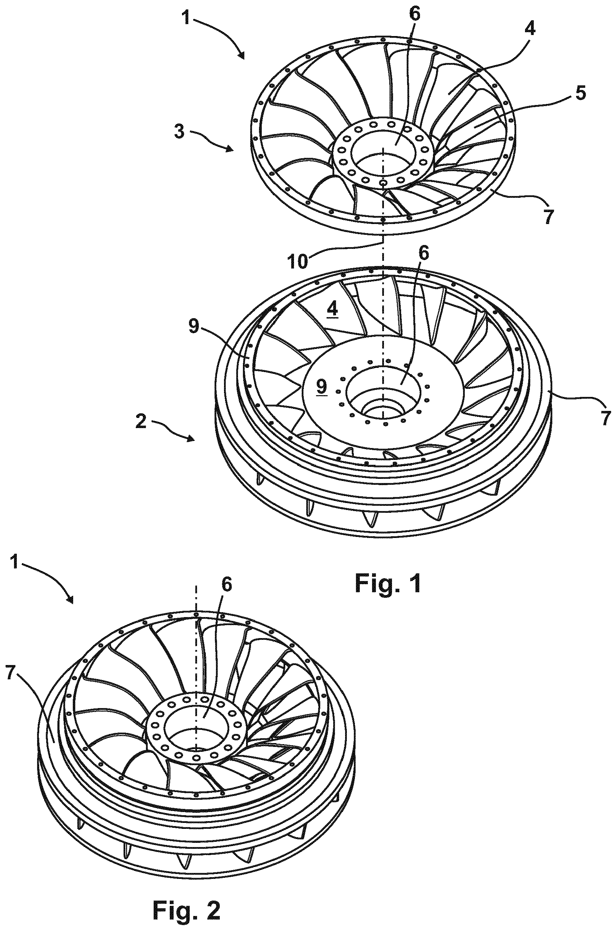

Fig. 1 und 2 zeigen ein erfindungsgemäßes Laufrad 1 in isometrischer Darstellung, wobei Fig. 1 das Laufrad 1 in einer Explosionsdarstellung zeigt, sodass einzelnen Laufradteile ersichtlich sind. Wie dargestellt weist das Laufrad 1 mehrere entlang einer Umfangsrichtung um die Rotationsachse 10 angeordnete Laufradschaufeln 4 sowie einen Kranz 7 und eine Nabe 6 auf. Das dargestellte Laufrad 1 ist in zwei Laufradteile geteilt, wobei jeder Laufradteil einen Teil jeder Laufradschaufel 4 sowie einen Teil der Nabe 6 und einen Teil des Kranzes 7 aufweist. Kontaktflächen 9 zwischen den Laufradteilen sind parallel und hier senkrecht zur Rotationsachse 10 ausgerichtet. Beim dargestellten Laufrad 1 sind die Laufradschaufeln 4 der einzelnen Laufradteile beabstandet, sodass sich je Laufradteil nur zwei rotationssymmetrische Kontaktflächen 9 ergeben, welche die Rotationsachse 10 umschließen und an Kranz 7 und Nabe 6 der einzelnen Laufradteile angeordnet sind. An den Laufradschaufeln sind somit keine Kontaktflächen 9 vorgesehen, um eine einfache Herstellbarkeit und gleichzeitig einen optimalen Wirkungsgrad zu erreichen. In einer alternativen Ausführung können jedoch auch Kontaktflächen 9 an den Laufradschaufeln 4 vorgesehen sein.

Das Laufrad 1 wird somit in einen Laufradteil, welcher einen Hochdruck-Laufradschaufelring 2 bildet, und einen Laufradteil, welcher einen Niederdruck-Laufradschaufelring 3 bildet, aufgeteilt, welche jeweils hydraulisch eigenständige Laufräder bilden und über die Kontaktflächen 9 lösbar starr verbunden sind.

Die Laufradteile sind im zusammengebauten Zustand über Verbindungsschrauben 8 verbunden, wobei die Verbindung üblicherweise derart ausgelegt ist, dass ein hydraulisches Moment um die Rotationsachse 10 vom Niederdruck-Laufradschaufelring 3 über eine an den Kontaktflächen 9 gegebene reibschlüssige Verbindung an den Hochdruck-Laufradschaufelring 2 übertragen wird. Über die Kontaktflächen 9 wird ferner ein Axialschub übertragen. Es versteht sich, dass Kräfte in Richtung der Rotationsachse 10 hier auch formschlüssig übertragen werden. Vom Hochdruck-Laufradschaufelring 2 erfolgt eine Übertragung der Kräfte und Momente an eine Welle, welche abhängig von einem Einsatz des Laufrades 1 beispielsweise mit einem Generator oder einem Motor verbunden sein kann. Ein Moment um die Rotationsachse 10 wird somit zwischen den Kontaktfläche 9 durch Kräfte tangential zu den Kontaktflächen 9, üblicherweise über Reibung, übertragen.

Wie ersichtlich sind die Laufradschaufeln 4 wie bei Francis-Turbinen üblich stark gekrümmt. Durch eine Aufteilung der Laufradschaufeln 4 auf hier jeweils zwei Teile ist eine vollflächige Beschichtung der Laufradschaufeln 4 möglich, sodass ein durch Abrasion bedingter Verschleiß verringert werden kann.

Mit einem erfindungsgemäßen Laufrad 1 kann insbesondere bei Francis- und Pumpenlaufrädern in Anlagen mit hohem Sandgehalt im Wasser eine Abrasion erheblich minimiert werden, wobei gleichzeitig eine einfache Herstellbarkeit gewährleistet ist. Die Erfindung stellt somit ein einfach und kostengünstig herstellbares Laufrad 1 bereit, mit welchem ein Betriebsrisiko für einen Kraftwerksbetreiber auch bei einem Einsatz in Flüssigkeiten mit hohem Sandgehalt wesentlich reduziert werden kann.

## Patentansprüche

1. Laufrad (1) für eine hydraulische Turbine, Pumpe oder Pumpturbine, insbesondere für eine Francisturbine, welches um eine Rotationsachse (10) drehbar lagerbar ist und entlang einer Umfangsrichtung um die Rotationsachse (10) angeordnete Laufradschaufeln (4) aufweist, wobei das Laufrad (1) zumindest zwei über Kontaktflächen (9) miteinander verbundene Laufradteile aufweist, wobei die Kontaktflächen derart positioniert und ausgerichtet sind, dass ein Moment um die Rotationsachse (10) zwischen den Laufradteilen im Wesentlichen über Kräfte tangential zu den Kontaktflächen (9) übertragbar ist, wobei jeder Laufradteil einen Teil jeder Laufradschaufel (4), einen Teil eines Kranzes (7) und einen Teil einer Nabe (6) des Laufrades (1) aufweist, wobei die einzelnen Laufradteile über eine Schraubverbindung an der Nabe (6) und am Kranz (7) des Laufrades verbunden und in einem Bereich der Laufradschaufeln (4) voneinander beabstandet sind,
**dadurch gekennzeichnet, dass**
sämtliche Kontaktflächen senkrecht zur Rotationsachse ausgerichtet sind.

2. Laufrad (1) nach Anspruch 1, **dadurch gekennzeichnet, dass** die Laufradteile über eine oder mehrere reibwerterhöhende Folien mittelbar verbunden sind.

3. Laufrad (1) nach Anspruch 1 oder 2, **dadurch gekennzeichnet, dass** jeder Laufradteil die Rotationsachse (10) umschließt.

4. Laufrad (1) nach einem der Ansprüche 1 bis 3, **dadurch gekennzeichnet, dass** die Laufradschaufeln (4) der Laufradteile in einem zusammengebauten Zustand derart angeordnet sind, dass bei einem bestimmungsgemäßen Betrieb eine Abströmung eines vorgelagerten Laufradteiles in einen Laufradschaufelkanal (5) eines nachgelagerten Laufradteiles führt und die Abströmung des vorgelagerten Laufradteiles im Wesentlichen nicht auf eine Eintrittskante des nachgelagerten Laufradteiles trifft.

5. Laufrad (1) nach einem der Ansprüche 1 bis 4, **dadurch gekennzeichnet, dass** die Laufradschaufeln (4) eine vor Abrasion schützende Beschichtung aufweisen.

## Claims

1. A runner (1) for a hydraulic turbine, pump or pumpturbine, particularly for a Francis turbine, which is mounted in a rotatable manner about an axis of rotation (10) and has runner blades (4) arranged around the axis of rotation (10) along a circumferential direction, the runner (1) having at least two runner parts that are connected to one another by means of contact surfaces (9), the contact surfaces being positioned and aligned in such a manner that a torque about the axis of rotation (10) between the runner parts can substantially be transmitted via forces tangential to the contact surfaces (9), each runner part having a part of each runner blade (4), a part of a rim (7) and a part of a hub (6) of the runner (1), the individual runner parts being connected by means of a screw connection at the hub (6) and at the rim (7) of the runner and being spaced from one another in a region of the runner blades (4),
**characterized in that**
all contact surfaces are aligned perpendicularly to the axis of rotation.

2. The runner (1) according to Claim 1, **characterized in that** the runner parts are indirectly connected by means of one or more friction-increasing films.

3. The runner (1) according to Claim 1 or 2, **characterized in that** each runner part surrounds the axis of rotation (10) .

4. The runner (1) according to one of Claims 1 to 3, **characterized in that** the runner blades (4) of the runner parts are arranged in an assembled state in such a manner that, in the case of intended operation, an outflow of an upstream runner part leads into a runner blade channel (5) of a downstream runner part and the outflow of the upstream runner part substantially does not hit a leading edge of the downstream runner part.

5. The runner (1) according to one of Claims 1 to 4, **characterized in that** the runner blades (4) have a coating protecting against abrasion.

## Revendications

1. Roue mobile (1), destinée à une turbine hydraulique, à une pompe ou à une turbine-pompe, notamment pour une turbine de type Francis, laquelle est susceptible d'être logée en rotation autour d'un axe de rotation (10) et comporte des aubes (4) de roue mobile, placées le long d'une direction périphérique autour de l'axe de rotation (10), la roue mobile (1) comportant au moins deux parties de roue mobile reliées l'une avec l'autre par l'intermédiaire de surfaces de contact (9), les surfaces de contact étant positionnées et orientées de telle sorte qu'un couple autour de l'axe de rotation (10) soit transmissible entre les parties de roue mobile, sensiblement par l'intermédiaire de forces, de manière tangentielle par rapport aux surfaces de contact (9), chaque partie de roue mobile comportant une partie de chaque aube (4) de roue mobile, une partie d'une couronne (7) et une partie d'un moyeu (6) de la roue mobile (1), les parties individuelles de la roue mobile étant reliées par l'intermédiaire d'un raccord boulonné avec le moyeu (6) et avec la couronne (7) de la roue mobile et étant écartées l'une de l'autre dans une zone des aubes (4) de roue mobile, **caractérisée en ce que** toutes les surfaces de contact sont orientées à la perpendiculaire de l'axe de rotation.

2. Roue mobile (1) selon la revendication 1, **caractérisée en ce que** les parties de roue mobile sont indirectement reliées par l'intermédiaire d'un ou de plusieurs films augmentant le coefficient de friction.

3. Roue mobile (1) selon la revendication 1 ou 2, **caractérisée en ce que** chaque partie de roue mobile entoure l'axe de rotation (10).

4. Roue mobile (1) selon l'une quelconque des revendications 1 à 3, **caractérisée en ce qu'**à l'état assemblé, les aubes (4) de roue mobile des parties de roue mobile sont placées de telle sorte que lors d'un fonctionnement conforme, un écoulement d'une partie de roue mobile placée en amont mène dans un canal (5) d'aube de roue mobile d'une partie de roue mobile placée en aval et que l'écoulement de la partie de roue mobile placée en amont ne soit sensiblement pas incident sur une arête d'entrée de la partie de roue mobile placée en aval.

5. Roue mobile (1) selon l'une quelconque des revendications 1 à 4, **caractérisée en ce que** les aubes (4) de roue mobile comportent un revêtement protecteur contre l'abrasion.
